(19) **Europäisches Patentamt**

**European Patent Office**

**Office européen des brevets**

(11) **EP 1 249 742 B1**

(12) **EUROPÄISCHE PATENTSCHRIFT**

(45) Veröffentlichungstag und Bekanntmachung des Hinweises auf die Patenterteilung:
**12.11.2003 Patentblatt 2003/46**

(51) Int Cl.⁷: **G05B 13/04**

(21) Anmeldenummer: **02007531.3**

(22) Anmeldetag: **02.04.2002**

(54) **Verfahren zur Regelung des Durchflusses durch eine Leitung sowie Regeleinrichtung zur Durchführung des Verfahrens**

Method for controlling the flow through a pipe and a control device for carrying out this method

Procédé de régulation de débit dans une conduite et dispositif de régulation servant à mettre en oeuvre le procédé

(84) Benannte Vertragsstaaten:
**DE FR GB**

(30) Priorität: **09.04.2001 DE 10117757**

(43) Veröffentlichungstag der Anmeldung:
**16.10.2002 Patentblatt 2002/42**

(73) Patentinhaber: **SIEMENS AKTIENGESELLSCHAFT**
**80333 München (DE)**

(72) Erfinder: **Pfeiffer, Bernd-Markus**
**76199 Karlsruhe (DE)**

(56) Entgegenhaltungen:
**DE-A- 3 929 615        DE-A- 19 932 794**
**DE-U- 29 513 152        DE-U- 29 610 789**

- **G. SCHWARZE: "Bestimmung der regelungstechnischen Kennwerte von P-Gliedern aus der Übergangsfunktion ohne Wendetangentenkonstruktion." "MESSEN, STEUERN, REGELN", Bd. 5, 1962, XP002201639**

**Beschreibung**

Die Erfindung betrifft ein Verfahren zur Regelung des Durchflusses durch eine Leitung mit einem Leitungsventil als Stellglied, mit einem Durchfluss-Messumformer zur Erfassung des Istwerts des Durchflusses und mit einem Regler, der in einem geregelten Betrieb die Stellgröße in Abhängigkeit eines vorgebbaren Sollwerts und des erfassten Istwerts des Durchflusses vorgibt und dessen Parameter automatisch eingestellt werden, sowie eine Regeleinrichtung zur Durchführung des Verfahrens.

Bei heutigen Stellungsreglern für Ventilantriebe, beispielsweise dem Stellungsregler SIPART PS der Siemens AG, wird nur die Ventilposition geregelt. Die Stellung des Ventils ist jedoch in den meisten Anwendungen nicht die vorrangig interessierende Größe, sondern nur eine unterlagerte Regelgröße für einen überlagerten Durchflussregler. Im Zuge einer zunehmenden Dezentralisierung der Intelligenz in die Feldgeräte einer prozesstechnischen Anlage hinein ist es sinnvoll, den Durchflussregler räumlich mit dem Stellungsregler zu kombinieren und somit beide Regler in einem Feldgerät zu integrieren. Ein derartiges Feldgerät als intelligenter Aktuator ist damit aus Sicht des Prozessleitsystems eine weitgehend autonome Einheit. Es bekommt von außen nur einen Sollwert für den Durchfluss vorgegeben und meldet den erreichten Istwert zurück. Unterlagerte Regelgrößen, z.B. die Ventilstellung, sind nur noch von lokalem Interesse.

Zur Erfassung des Istwertes des Durchflusses ist ein Durchfluss-Messumformer erforderlich, der beispielsweise nach einem magnetisch-induktiven, Ultraschall-, Drall-, Schwebekörper- oder Coriolis-Messprinzip den Durchfluss erfasst. Zur Beeinflussung des Durchflusses durch eine Rohrleitung wird ein Ventil als Stellglied benötigt, dessen Stellung nach Vorgabe einer Stellgröße einstellbar ist.

Ein adaptiver Regler für verzögerungsbehaftete Prozesse mit Ausgleich ist aus der DE-OS 39 29 615 bekannt. Er besitzt die Fähigkeit, seine Parameter selbsttätig an die sich zeitlich ändernden Eigenschaften einer Regelstrecke anzupassen. Dazu wird die Antwort des Prozesses auf eine sprungförmige Verstellung des Sollwertes aufgezeichnet und in einem iterativen Verfahren nach einem PTn-Modell gesucht, mit welchem diese Sprungantwort möglichst gut nachgebildet werden kann. Als optimal werden die Parameter des PTn-Modells angesehen, mit welchen der nach der Methode der kleinsten Fehlerquadrate berechnete Fehler zwischen den Sprungantworten des PTn-Modells und des realen Prozesses minimal ist. Nach Abschluss der Prozessidentifikation wird anhand des ermittelten Prozessmodells ein Regler nach dem Betragsoptimum entworfen. Betrachtet werden dort einschleifige Regelkreise mit PI- oder PID-Reglerkern. Die zu regelnden Prozesse zeigen ein Verhalten mit Ausgleich, d.h. sie stellen Regelstrecken dar, bei denen die Sprungantwort in einen neuen Beharrungszustand einläuft. Mit dem bekannten Verfahren kann ein brauchbarer, aber recht vorsichtig eingestellter Regler entworfen werden. Nachteilig ist jedoch der hohe Aufwand des Verfahrens. Es erfordert die Speicherung von kompletten Messdatensätzen sowie einen umfangreichen numerischen Optimierungsalgorithmus. Daher wird das Verfahren auf einem Personal Computer implementiert, der lediglich zum Reglerentwurf in der prozesstechnischen Anlage eingesetzt wird. Im späteren Betrieb ist der Personal Computer dagegen nicht mehr erforderlich, da der damit entworfene und parametrierte Regler autark arbeitet.

Einrichtungen zur Identifikation einer Übertragungsstrecke unter der Annahme, dass sie mittels eines PTn-Modells dargestellt werden kann, sind z.B. aus der Druckschrift DE 29 513 152 bekannt.

Der Erfindung liegt die Aufgabe zugrunde, ein Verfahren zur Regelung des Durchflusses durch eine Leitung sowie eine Regeleinrichtung zur Durchführung des Verfahrens zu schaffen, die selbsteinstellend sind und dabei einen geringen Aufwand erfordern.

Zur Lösung dieser Aufgabe weist das neue Verfahren der eingangs genannten Art die in Anspruch 1 angegebenen Merkmale auf. In den abhängigen Ansprüchen sind vorteilhafte Weiterbildungen, in Anspruch 7 eine Regeleinrichtung zur Durchführung des Verfahrens und in Anspruch 8 ein Feldgerät mit einer derartigen Regeleinrichtung beschrieben.

Die Erfindung hat den Vorteil, dass zur Prozessidentifikation kein Abspeichern eines vollständigen Verlaufs der Sprungantwort erforderlich ist. Sie kann auf einer Recheneinheit mit vergleichsweise geringer Rechenleistung und geringem Speicherplatzbedarf realisiert werden. Somit ermöglicht es die Erfindung, in einer prozesstechnischen Anlage mit einer dezentralen Verteilung der Intelligenz einen Durchflussregler in einem Feldgerät als Durchfluss-Regeleinrichtung gemeinsam mit einem Stellungsregler eines Ventils zu integrieren. Ein Durchfluss-Messumformer zur Erfassung des Istwertes des Durchflusses, der ebenfalls in das Feldgerät integrierbar ist, benötigt keinen eigenen Anschluss an ein Prozessleitsystem, sondern kann direkt lokal an den Durchflussregler angeschlossen werden. Bei einer Vernetzung der Sensoren und Aktuatoren einer prozesstechnischen Anlage mit einem Feldbus ist lediglich für die Durchfluss-Regeleinrichtung ein Feldbusanschluss erforderlich. An diesem wird über den Feldbus ein Sollwert vorgegeben und der Durchfluss-Regeleinrichtung meldet den erreichten Istwert des Durchflusses zurück. Für die Durchfluss-Regeleinrichtung wird keine Rechenleistung auf einer externen speicherprogrammierbaren Steuerung und keine Projektierung und Programmierung in einem Projektierungswerkzeug benötigt. Er kann mit Hilfe einer lokalen Bedienung unabhängig von einem Prozessleitsystem in Betrieb genommen werden. Eine derartige selbsteinstellende Einrichtung zur Durchfluss-Regelung kann als nahezu autonome Einheit betrachtet werden, die vergleichsweise wenig Kommunikation erfordert. Eine autarke Gestaltung der Funktionalität ist ein Beitrag zur klaren Modularisierung der Gesamtautomatisierung einer Anlage und damit zur Reduktion der Gesamtkomplexität und der Engineeringkosten. Zudem wird die Kommunikationsbelastung auf einem Feldbus reduziert, da die Vorgabe von Sollwerten durch ein Leitsystem deutlich seltener erfolgt und außerdem weniger zeitkritisch ist als die Übertragung interner Daten eines Regelkreises, beispielsweise des mit einem Durchfluss-Messumformer erfassten Istwertes, über den Feldbus.

In einem ersten Schritt der Prozessidentifikation die Laufzeit des Ventils zu ermitteln, hat den Vorteil, dass bei der späteren Messung der statischen Kennlinie, d.h. der Abhängigkeit des Durchflusses von der vorgegebenen Stellgröße im quasi-stationären Zustand, die Wartezeit, bis ein stabiler Zustand erreicht ist, in Abhängigkeit dieser Ventil-Laufzeit festgelegt werden kann. Somit ist kein kompliziertes Überprüfen der Einschwingvorgänge beim jeweils sprungförmigen Durchfahren des Ventilstellbereichs mit mehreren Zwischenstufen auf Einhalten bestimmter Kriterien für das Erreichen des stationären Zustands erforderlich. Dazu genügt bereits eine einfache Zeitüberwachung. In der Praxis hat sich das Abwarten des Zehnfachen der gemessenen Ventil-Laufzeit als ausreichend erwiesen.

Vorzugsweise wird zur Ermittlung der Zeitprozent-Kennwerte dasjenige Intervall zwischen zwei Zwischenstufen verwendet, in welchem der Verlauf des Durchflusses beim sprungförmigen Durchfahren des Ventilstellbereichs die größte Steigung aufweist. Damit wird eine Reglereinstellung erhalten, die für die Dynamik des Prozesses in den übrigen Intervallen nicht zu scharf ist.

Vorteilhaft werden als die erste und als die zweite prozentuale Änderung 10% bzw. 90% des Abstandes zwischen Anfangs- und Endwert des Durchflusses bei einem Sprung der Stellgröße zur Bestimmung zweier Kennwerte des Durchflusses vorgegeben. Damit wird auch im Bereich größerer Werte der Ordnung n des PTn-Modells eine starke Abhängigkeit der Ordnung vom Quotienten aus dem ersten und dem zweiten Zeitprozent-Kennwert erhalten, so dass auch bei Prozessen höherer Ordnung mit beispielsweise Ordnung n>5 noch ausreichend deutlich zwischen zwei Werten der Ordnung n unterschieden werden kann.

Wenn der Regler als PI-Regler ausgebildet ist und seine Parameter nach dem Betragsoptimum eingestellt werden, liefert das Regelungsverfahren besonders gute Ergebnisse.

Die Regelungsergebnisse können noch weiter verbessert werden, indem nach Einstellen der Reglerparameter in Abhängigkeit des PTn-Modells und nach Umschalten auf geregelten Betrieb eine Feineinstellung der Reglerverstärkung durch eine einfache Nachoptimierung durchgeführt wird, die als iteratives Verfahren ausgebildet werden kann.

Anhand der Zeichnungen in denen ein Ausführungsbeispiel der Erfindung dargestellt ist, werden im Folgenden die Erfindung sowie Ausgestaltungen und Vorteile näher erläutert.

Es zeigen:

Figur 1    ein Blockschaltbild einer Durchfluss-Regeleinrichtung,
Figur 2    ein Zeitdiagramm verschiedener Signale des Regelkreises bei der Reglerselbsteinstellung,
Figur 3    ein Zeitdiagramm zur Erläuterung der Ermittlung der Zeitprozent-Kennwerte,
Figur 4    ein Diagramm zur Erkennung der Prozessordnung aus Zeitprozent-Kennwerten und
Figur 5    ein Diagramm zur Abhängigkeit eines Korrekturfaktors von der Überschwingweite bei der Feineinstellung des Reglers.

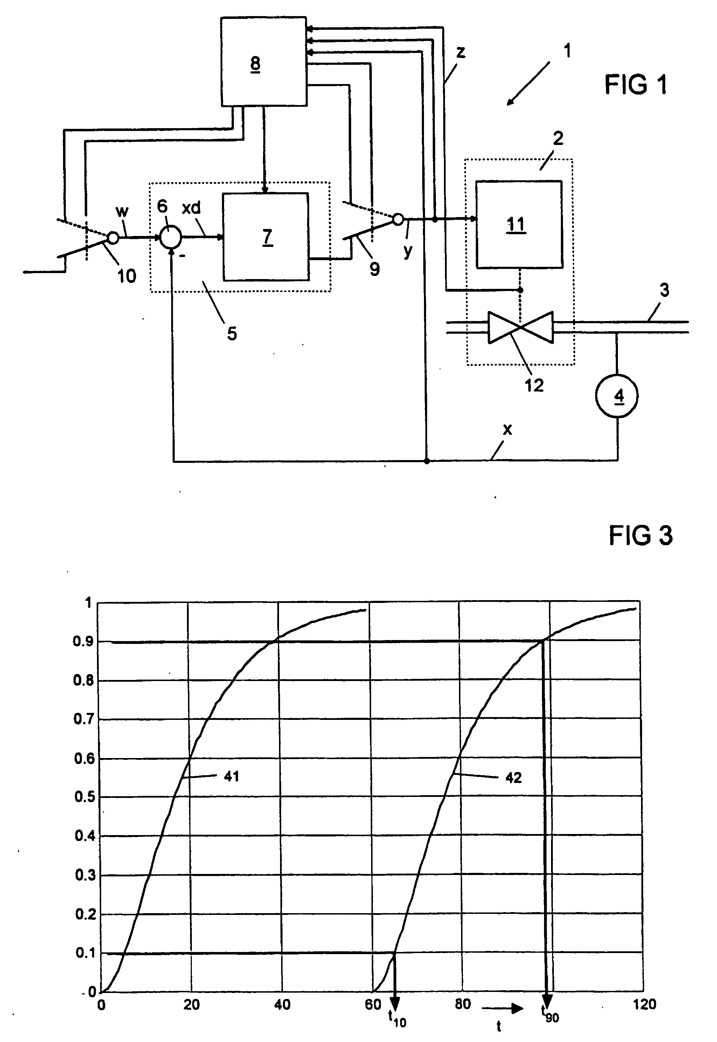

Eine Durchfluss-Regeleinrichtung 1 enthält gemäß Figur 1 ein Leitungsventil 2 als Stellglied, dessen Stellung z nach Vorgabe einer Stellgröße y einstellbar ist und den Durchfluss eines Mediums durch eine Leitung 3 beeinflusst. Das Leitungsventil 2 ist als Regelventil ausgeführt mit einem Stellungsregler 11 und einer Schließeinrichtung 12. Ein Durchfluss-Messumformer 4 dient zur Erfassung des Istwerts x des Durchflusses, der im Regelkreis der Regelgröße entspricht. Der Istwert x wird einem Regler 5 zugeführt. Dieser weist einen Vergleicher 6 zur Bildung einer Differenz aus einem Sollwert w und dem Istwert x auf. Diese Regelabweichung xd ist Eingangsgröße eines Reglerkerns 7, der als PI-Reglerkern ausgebildet ist und in Abhängigkeit der Regelabweichung xd und somit in Abhängigkeit des Sollwerts w und des erfassten Istwerts x des Durchflusses im geregelten Betrieb die Stellgröße y vorgibt. Zur Prozessidentifikation und zum Reglerentwurf dient eine Einrichtung 8, durch welche ein Schalter 9 betätigbar ist, mit dem zwischen einem geregelten Betrieb, in welchem die Stellgröße y von dem Regler 5 vorgegeben wird, und einem gesteuerten Betrieb, in welchem die Einrichtung 8 eine zur Prozessidentifikation geeignete Anregung als Stellgröße y auf das Leitungsventil 2 schaltet, umgeschaltet werden kann. Weiterhin ist ein Schalter 10 vorgesehen, der ebenfalls durch die Einrichtung 8 einstellbar ist. Im Normalbetrieb der Durchfluss-Regeleinrichtung 1 befindet sich der Schalter 10 in der dargestellten Lage, in welcher ein beispielsweise über einen Feldbus von einem Prozessleitsystem vorgegebener Sollwert w auf den Vergleicher 6 des Reglers 5 gegeben wird. In einer anderen Stellung des Schalters 10 liefert die Einrichtung 8 den Sollwert w für den Regler 5 zur Anregung bei einer Feineinstellung der Reglerparameter. Die für den Regler 5 relevante Regelstrecke setzt sich zusammen aus dem Leitungsventil 2, der Strömungsmechanik in der Leitung 3 und dem Durchfluss-Messumformer 4. Das Zusammenwirken dieser drei Komponenten ergibt das Verhalten der Regelstrecke, das zur Prozessidentifikation anhand der Stellgröße y und der Regelgröße x in der Einrichtung 8 durch ein PTn-Modell nachgebildet wird. Anhand dieses Modells werden in der Einrichtung 8 geeignete Parameter für den PI-Regler im Reglerkern 7 des Reglers 5 berechnet und der Regler 5 entsprechend eingestellt. Danach wird die Verstärkung des Reglers 5 noch durch eine Feineinstellung optimiert. Als Eingangsgrößen werden von der Einrichtung 8 zur Prozessidentifikation und zum Reglerentwurf der Istwert x des Durchflusses, die Stellung z des Ventils sowie die Stellgröße y erfasst.

In Figur 1 sind die Einrichtung 8 zur Prozessidentifikation und zum Reglerentwurf, der Regler 5, der Stellungsregler 11 sowie die Schalter 9 und 10 zum besseren Verständnis der Erfindung als getrennte Komponenten dargestellt. In einer technischen Realisierung der Durchfluss-Regeleinrichtung 1 können diese jedoch durch eine einzige Recheneinheit mit einem geeigneten, in einem Speicher abgelegten Programm realisiert werden. Durch Integration der Schließeinrichtung 12, des Durchfluss-Messumformers 4 und der programmierten Recheneinheit in einem Gerät ist ein fast autonom arbeitendes, intelligentes Feldgerät als Durchfluss-Regeleinrichtung erhältlich.

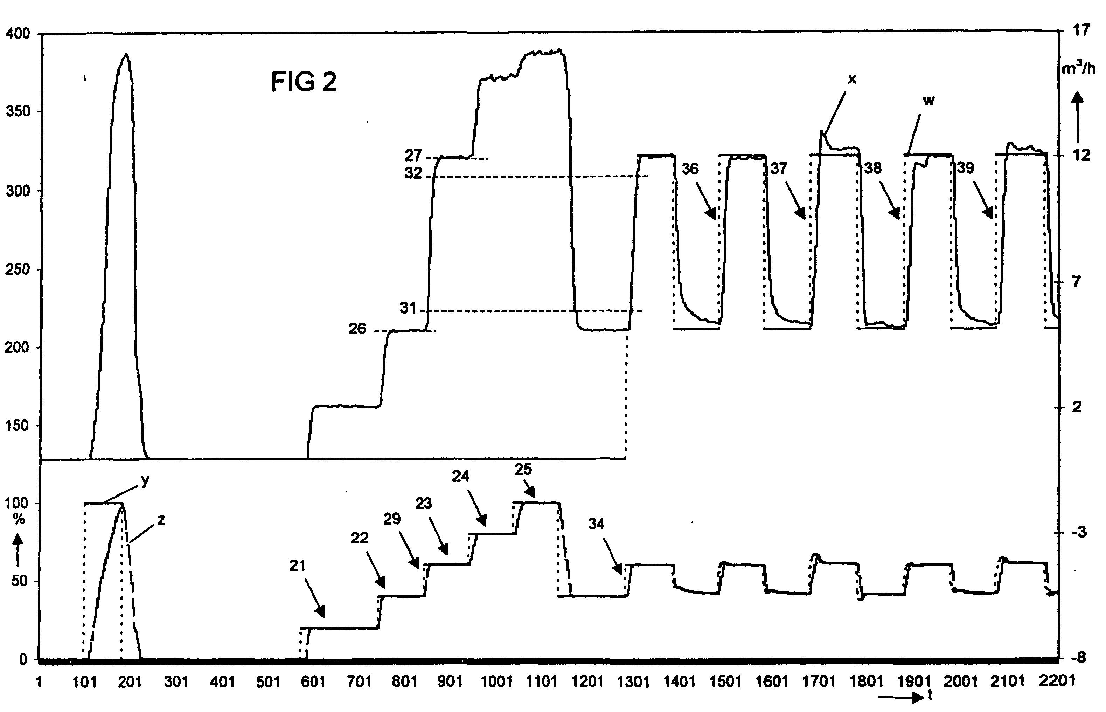

Anhand der Figuren 2 bis 5 wird im Folgenden das mit der Durchfluss-Regeleinrichtung 1 gemäß Figur 1 durchgeführte Verfahren zur Selbsteinstellung des Reglers 5 näher erläutert.

In Figur 2 sind die Verläufe des Istwerts x des Durchflusses, des Sollwerts w, der Stellgröße y und der Stellung z des Ventils in einem Zeitdiagramm eingetragen.

An der Abszisse ist die Zeit t in Abtastschritten von jeweils 200 ms Dauer aufgetragen. Die linke Ordinate ist den unteren beiden Kurvenverläufen, d.h. der Stellgröße y und der Stellung z des Ventils, zugeordnet. Die Maßeinheit ist 1% und der Wertebereich umfasst 0-100%. Die rechte Ordinate gilt für die oberen beiden Kurvenverläufe, also für den Verlauf des Sollwerts w und des Istwerts x des Durchflusses, der in $m^3/h$ gemessen wird. Die Inbetriebnahme einer Durchfluss-Regelung beginnt mit einer Messung einer Ventil-Laufzeit $t_m$. Dazu wird die Durchfluss-Regeleinrichtung in einen gesteuerten Betrieb gesetzt, d.h. der Schalter 9 in Figur 1 in die gestrichelt gezeichnete Position gelegt. Etwa beim Abtastschritt 100 (Figur 2) wird ein Stellgrößensprung von 0% auf 100% angelegt und die Zeit gestoppt, bis die Stellung z des Ventils auf 100% gefolgt ist. Dieselbe Messung wird daraufhin auch in Gegenrichtung durchgeführt und aus den beiden Messungen wird ein Mittelwert berechnet, welcher die Ventil-Laufzeit $t_m$ repräsentiert. Da die Laufzeit des Ventils maßgeblichen Einfluss auf die Dynamik der Regelstrecke hat, kann aus ihr mit hoher Zuverlässigkeit eine Mindestzeit abgeleitet werden, die abgewartet werden muss, bis der Durchfluss nach einem Stellgrößensprung zumindest näherungsweise einen stabilen Zustand erreicht hat.

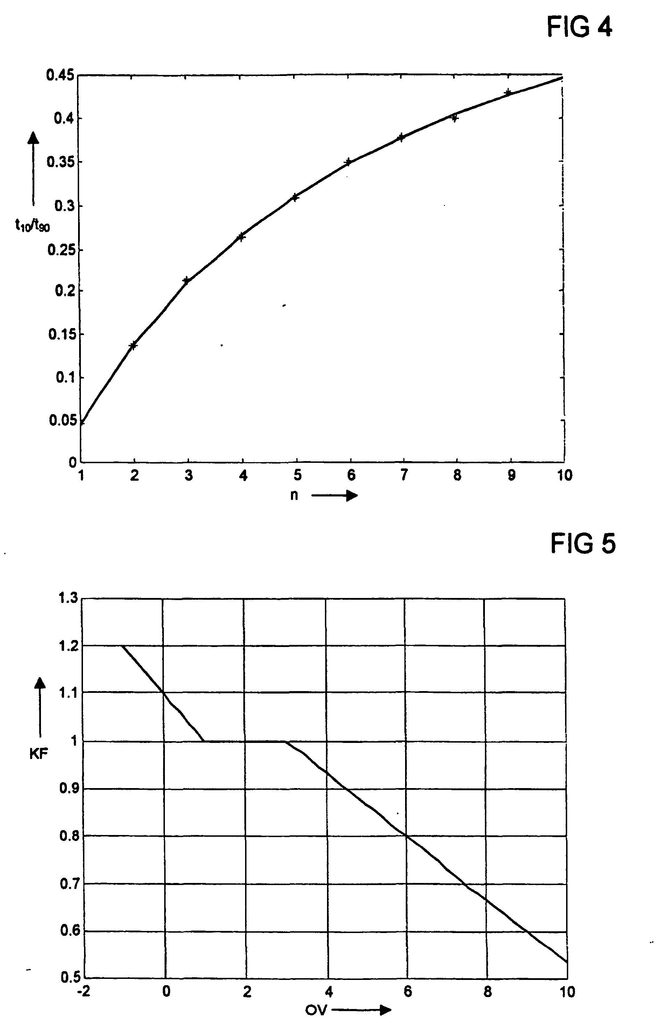

Zur Bestimmung der statischen Kennlinie des Ventils, d.h. der statischen Abhängigkeit des Durchflusses von der vorgegebenen Stellgröße, wird zwischen etwa dem Abtastschritt 570 und dem Abtastschritt 1.130 mit Zwischenstufen 21, 22, 23 und 24 der Höhe 20%, 40%, 60% bzw. 80% der Stellbereich jeweils sprungförmig bis zum Ende des Stellbereichs bei einer Stufe 25 durchfahren. Auf den einzelnen Stufen wird jeweils ein Vielfaches, vorzugsweise das Zehnfache der Ventil-Laufzeit $t_m$ abgewartet, bis sich näherungsweise ein stabiler Zustand eingestellt hat. Der sich dabei ergebende Istwert x des Durchflusses wird der jeweiligen Stufe zugeordnet und abgespeichert. Zur besseren Anschaulichkeit des Verfahrens wurde bei den in Figur 2 dargestellten Kurvenverläufen die Wartezeit in den jeweiligen Stufen erheblich reduziert. Nach dem Durchfahren des Stellbereichs wird ermittelt, in welchem Intervall zwischen zwei Stufen die Verstärkung der Regelstrecke am größten ist. In dem gezeigten Ausführungsbeispiel ist dies das Intervall zwischen den beiden Zwischenstufen 22 und 23 mit dem jeweiligen Endwert 26 bzw. 27 des Istwerts x. Der auf der Zwischenstufe 22 erreichte Endwert 26 stellt gleichzeitig den Anfangswert des Durchflusses bei einem Sprung 29 der Stellgröße y von der Zwischenstufe 22 auf die Zwischenstufe 23 dar. Aus dem Anfangswert 26 und dem Endwert 27 des Istwertes x des Durchflusses bei dem Sprung 29 werden ein erster Kennwert 31 und zweiter Kennwert 32 ermittelt, die 10% bzw. 90% des Übergangs vom Anfangswert 26 auf den Endwert 27 entsprechen. Anschließend wird ein weiterer Sprung 34 der Stellgröße y durchgeführt, der praktisch eine Wiederholung des Sprungs 29 darstellt. Bei diesem Sprung wird der Sollwert w nachgeführt, damit dieser sich nach dem Sprung 34 auf den neuen Endwert des Istwerts x des Durchflusses einstellt. Diese Maßnahme ist aber ohne Relevanz für den gesteuerten Betrieb während der Durchführung des Sprungs 34. Während dieses Sprungs 34'werden der Istwert x des Durchflusses auf Überschreiten des ersten Kennwerts 31 sowie des zweiten Kennwerts 32 überwacht, die zugehörigen Zeitpunkte ermittelt und als ein erster bzw. ein zweiter Zeitprozent-Kennwert abgespeichert. Das Verfahren der Zeitprozent-Kennwertermittlung wird später anhand Figur 3 näher erläutert. Anhand der beiden Zeitprozent-Kennwerte werden nach dem Zeitprozent-Kennwertverfahren, das ebenfalls später detailliert beschrieben wird, die Parameter-Ordnung n und Zeitkonstante T eines PTn-Modells bestimmt, welches die Abhängigkeit des Istwerts x des Durchflusses von der Stellgröße y näherungsweise nachbildet. Das auf diese Weise erhaltene PTn-Modell bildet die Grundlage für den Entwurf eines PI-Reglers nach dem Verfahren des Betragsoptimums, das aus der eingangs genannten DE-OS 39 29 615 bekannt ist. Der Reglerkern 7 (Figur 1) ist nun grob parametriert und zur Feineinstellung werden nachfolgend der Schalter 9 in die mit einer durchgezogenen Linie eingezeichnete Stellung und der Schalter 10 in die mit einer gestrichelten Linie angedeutete Stellung gelegt. Im geregelten Betrieb werden nun von der Einrichtung 8 mehrere Sollwertsprünge 36, 37, 38 und 39 vorgegeben, deren Höhe jeweils einem Sprung vom Anfangswert 26 auf den Endwert 27 entspricht. Dabei wird das Überschwingverhalten des Istwerts x des Durchflusses analysiert und nach einem später genauer erläuterten Verfahren eine Feineinstellung des Reglers 5 durch Anpassen seiner Verstärkung an die jeweiligen Gegebenheiten vorgenommen. Dabei können auch die den Sprüngen 36...39 jeweils folgenden Sprünge in Gegenrichtung ausgewertet und durch Bilden eines Mittelwerts zweier aus entgegengesetzten Sprüngen ermittelter Überschwingweiten in die Analyse einbezogen werden.

Anhand der Prinzipdarstellung in Figur 3 soll im Folgenden die Ermittlung der Zeitprozent-Kennwerte näher erläutert werden. Das Verfahren kommt dabei vorteilhaft ohne einen größeren Datenspeicher zur Abspeicherung des vollständigen Verlaufs des Istwerts x nach Anlegen eines Stellgrößensprungs aus. Anhand einer ersten Sprungantwort 41, die in Figur 3 zur besseren Anschaulichkeit verkürzt dargestellt ist, werden Anfangs- und Endwert ermittelt und auf eine Skala von 0 bis 100% abgebildet. Der Anfangswert in diesem Beispiel ist 0 und der Endwert 1. Infolgedessen ist auf der Ordinate ein Wertebereich von 0 bis 1 aufgetragen. Eine Skala für die Zeit t befindet sich auf der Abszisse. Anhand des Anfangs- und Endwerts werden Ordinatenwerte für 10% und 90% der Höhe der Sprungantwort 41 abgeleitet. Ein erster Kennwert hat somit den Ordinatenwert 0,1, ein zweiter Kennwert den Ordinatenwert 0,9. In einem zweiten Sprungversuch werden nun eine Sprungantwort 42 überwacht und die jeweiligen Zeiten gemessen, wann die Sprungantwort 42 den ersten Kennwert bei dem Ordinatenwert 0,1 und den zweiten Kennwert beim Ordinatenwert 0,9 überschreitet. Diese Zeiten stellen den ersten Zeitprozent-Kennwert $t_{10}$ bzw. den zweiten Zeitprozent-Kennwert $t_{90}$ dar. Dieses Verfahren zeichnet sich durch einen geringen Bedarf an Speicherplatz und geringe Anforderungen an die Rechenleistung einer Einrichtung zur Durchführung des Verfahrens aus.

Die Sprungantwort eines PTn-Modells mit der Übertragungsfunktion

$$G(s) = \frac{K}{(Ts + 1)^n}$$

mit einer Verstärkung K, einer Zeitkonstante T und einer Ordnung n lautet

$$x(t) = x_0 + K(1 - (\sum_{\nu=0}^{n-1} \frac{(t/T)^\nu}{\nu!})e^{-t/T})$$

mit einem Verlauf x(t) und einem Anfangswert $x_0$.

Daraus kann eine Bedingung für die Zeitprozent-Kennwerte $t_p$ des Erreichens von p Prozent der Sprunghöhe abgeleitet werden:

$$\frac{x(t_p) - x_0}{K} = 1 - (\sum_{\nu=0}^{n-1} \frac{(t_p/T)^\nu}{\nu!})e^{-t_p/T} \stackrel{!}{=} \frac{p}{100} \quad \Leftrightarrow$$

$$\frac{100-p}{100}e^{t_p/T} - \sum_{\nu=0}^{n-1} \frac{(t_p/T)^\nu}{\nu!} = 0$$

In dem Buch "Regelungstechnik I" von Heinz Unbehauen, Vieweg Verlag, 7. Auflage, 1992, Seiten 363 bis 373 ist das Zeitprozent-Kennwerteverfahren als manuelles, semigraphisches Verfahren beschrieben, mit welchem nach der Messung der Zeitprozent-Kennwerte aus zwei Diagrammen die gewünschten Parameter eines PTn-Modells abgelesen werden können.

Die Lösungen $t_p/T$ der Gleichung in der letzten Zeile obiger Bedingung, d.h. die Nullstellen der Gleichung, lassen sich nur für n=1 analytisch finden. Für p=90 ergibt sich daraus:

$$\frac{t_{90}}{T} = \ln 10 \approx 2.3$$

Für andere Werte der Ordnung n müssen die Nullstellen numerisch gesucht werden. Beispielsweise für n=10 und p=90 lautet die numerische Lösung:

$$\frac{t_{90}}{T} \approx 14.2$$

und für Ordnungen 1<n<10 ist der Verlauf näherungsweise linear von der Ordnung n abhängig. Man erhält aus diesen zwei Punkten die Geradengleichung:

$$\frac{T_{90}}{T}(n) \approx 2.3 + \frac{14.2 - 2.3}{10 - 1}(n-1) \approx 2.3 + 1.32(n-1)$$

Die Ordnung n wird vorzugsweise aus dem Verhältnis $t_{10}/t_{90}$ bestimmt. In Figur 4 ist zur Verdeutlichung ein Diagramm mit der Ordnung n auf der Abszisse und dem Verhältnis $t_{10}/t_{90}$ auf der Ordinate dargestellt. Die bei den verschiedenen Werten der Ordnung n aus geltenden Verhältniswerten sind als Punkte eingetragen. Diese Punkte werden durch die Hyperbel

$$t_{10}/t_{90}(n) = a/(n-b) + c$$

mit a=-4,3159, b=-5,3258 und c=0,7277 approximiert. Der Verlauf dieser Hyperbel ist als Kurve in Figur 4 eingezeichnet.

Die Ordnung n des PTn-Modells wird aus der Gleichung

$$n = \frac{a}{\dfrac{t_{10}}{t_{90}} - c} + b$$

bestimmt. Anschließend wird aus der oben genannten Geradengleichung für $t_{90}/T$ die Zeitkonstante T ermittelt zu:

$$T = \frac{t_{90}}{2.3 + 1.32(n-1)}$$

Somit sind die Parameter Ordnung n und Zeitkonstante T des PTn-Modells mit wenig Programmschritten und Datensätzen ermittelt.

Aufgrund verschiedener Störeinflüsse können die Ergebnisse der Schätzung der dynamischen Parameter verfälscht werden, beispielsweise aufgrund von Messrauschen, das bei Durchfluss-Messumformern generell höher als bei Temperatur-Messumformern zu erwarten ist, insbesondere dann, wenn auf eine starke Tiefpass-Filterung des Messergebnisses verzichtet wird. Weitere Störungsursachen können die Abhängigkeit der Ventil-Laufzeit von der jeweiligen Signalform und Sprunghöhe der Stellgröße oder die Abhängigkeit der Dynamik der Regelstrecke von einem Füllstand in einem Lagertank sein, der sich auf den versorgungsseitigen Druck in der Leitung und damit auf die Strömungsmechanik auswirkt.

Das beschriebene Verfahren zur Prozessidentifikation und zum Reglerentwurf liefert zuverlässig stabile Reglereinstellungen. Die jeweilige Einschwingcharakteristik, beispielsweise die Überschwingweite, ist jedoch nicht genau vorhersehbar. Um von der groben Reglereinstellung zu einer besseren zu gelangen, wird in einer iterativen Vorgehensweise bei einer Feineinstellung das tatsächliche Verhalten des realen, geschlossenen Regelkreises anhand bestimmter Merkmale beurteilt und sukzessiv in kleinen Schritten verbessert. Eine solche iterative Einstellung mit mehreren Sprungversuchen nach oben und nach unten ist bei einer Durchfluss-Regelung praktikabel, da die Zeit zur Aufnahme einer Sprungantwort im Bereich von Bruchteilen von Minuten liegt und damit die Gesamtdauer der Feineinstellung in akzeptablen Grenzen bleibt. Dabei wird lediglich die Verstärkung des Reglers in geringem Umfang an die jeweiligen Gegebenheiten angepasst. Maßgeblich für die Feineinstellung der Verstärkung ist die Überschwingweite bei Sollwertsprüngen. Das gewünschte dynamische Verhalten wird anhand einer Soll-Überschwingweite spezifiziert. Gewünscht wird eine sehr kleine, jedoch im Ansatz zumindest vorhandene Überschwingweite, weil ansonsten noch Spielraum für eine Verschärfung der Reglereinstellung bestehen könnte. Es wird daher vorzugsweise gefordert, dass der relative Überschwinger bei Sollwertsprüngen zwischen 1% und 3% der Sprunghöhe betragen soll. Dazu werden folgende Einstellregeln nach Art einer Fuzzy-Logik zunächst qualitativ und linguistisch formuliert:

1. Wenn die Überschwingweite etwas oder sehr viel zu groß ist, dann muss die Verstärkung etwas bzw. drastisch reduziert werden.
2. Wenn der Überschwinger zu klein oder nicht vorhanden ist, dann kann die Verstärkung vergrößert werden.

Die neue Verstärkung wird bei jeder Iteration gemäß der Zuweisung

$$K_{p,neu} = K_{p,alt} \cdot KF$$

mit

K_{p,neu} - neu eingestellte Verstärkung,
K_{p,alt} - bisherige Verstärkung und
KF - ein Korrekturfaktor

berechnet. Je stärker das Verhalten vom Sollzustand abweicht, desto größer ist der Korrektureingriff.

Im einfachen vorliegenden Fall ist es in vorteilhafter Weise nicht erforderlich, eine echte Fuzzy-Logik mit linguistischen Variablen zur Feineinstellung zu realisieren, sondern es genügt, eine lineare Abhängigkeit des Korrekturfaktors KF von der Verhaltensabweichung mit Hilfe einer Kennlinie zu implementieren, die in Figur 5 dargestellt ist. An der Abszisse sind die Prozentwerte der Überschwingweite OV, an der Ordinate die Werte des Korrekturfaktors KF aufgetragen. Der gezeigten Kennlinie liegen folgende quantitative Einstellregeln zugrunde:

Wenn die Überschwingweite zwischen 1% und 3% liegt, dann bleibt die Verstärkung unverändert, d.h. KF=1, wenn die Überschwingweite beispielsweise 6% beträgt, dann reduziere die Verstärkung um 20%, d.h. $K_f$ =0,8, und wenn die Überschwingweite Null, d.h. nicht vorhanden ist, dann steigere die Verstärkung um 10%, d.h. KF =1,1.

Die Überschwingweite wird jeweils bei einem positiven und einem negativen Sollwertsprung gemessen und gemittelt, da je nach pneumatischem Versorgungsdruck Unterschiede zwischen dem Verhalten bei Sollwertsprüngen unterschiedlicher Richtung beobachtet werden können.

Kurvenverläufe, die bei einer Feineinstellung nach dem beschriebenen iterativen Verfahren aufgenommen wurden, sind in Figur 2 ab etwa dem Abtastschritt 1.400 dargestellt.

## Patentansprüche

1. Verfahren zur Regelung des Durchflusses durch eine Leitung (3)
   mit einem Leitungsventil (2) als Stellglied, dessen Stellung (z) nach Vorgabe einer Stellgröße (y) einstellbar ist,
   mit einem Durchfluss-Messumformer (4) zur Erfassung des Istwerts (x) des Durchflusses und
   mit einem Regler (5), der in einem geregelten Betrieb die Stellgröße (y) in Abhängigkeit eines vorgebbaren Sollwerts (w) des Durchflusses und des erfassten Istwerts (x) vorgibt,
   wobei zur Prozessidentifikation der Stellbereich des Ventils mit mehreren Zwischenstufen (21...24), in denen jeweils zumindest näherungsweise das Erreichen eines stabilen Zustands des Durchflusses abgewartet wird, jeweils sprungförmig in einem gesteuerten Betrieb zur Bestimmung der statischen Abhängigkeit des Durchflusses von der vorgegebenen Stellgröße (y) durchfahren wird,
   aus dem Anfangswert (26) und dem Endwert (27) des Durchflusses bei einem Sprung (29) der Stellgröße (y) von einer Zwischenstufe (22) auf eine darauf folgende, andere Zwischenstufe (23) zumindest zwei Kennwerte (31, 32) des Durchflusses, die einer ersten und einer zweiten vorgegebenen prozentualen Änderung des Durchflusses in Bezug auf den Übergang vom Anfangswert (26) auf den Endwert (27) entsprechen, bestimmt werden,
   ein weiterer Sprung (34) der Stellgröße (y) von der einen Zwischenstufe (22) auf die andere Zwischenstufe (23) durchgeführt wird und die Zeiten zwischen Sprunganfang und Überschreiten des ersten Durchfluss-Kennwerts (31) als ein erster Zeitprozent-Kennwert ($t_{10}$) sowie zwischen Sprunganfang und Überschreiten des zweiten Durchfluss-Kennwerts (32) als ein zweiter Zeitprozent-Kennwert ($t_{90}$) ermittelt werden, anhand der beiden Zeitprozent-Kennwerte ($t_{10}$, $t_{90}$) nach dem Zeitprozent-Kennwerte-Verfahren die Parameter-Ordnung n und Zeitkonstante T eines PTn-Modells zur Modellierung der Abhängigkeit des Durchflusses von der Stellgröße ermittelt werden, wobei die Parameter des Reglers (5) in Abhängigkeit des PTn-Modells bestimmt und eingestellt werden und wobei in einen geregelten Betrieb umgeschaltet wird, in welchem der so eingestellte Regler (5) den Durchfluss regelt.

2. Verfahren nach Anspruch 1, **dadurch gekennzeichnet, dass** in einem ersten Schritt der Prozessidentifikation die Laufzeit des Ventils (2) ermittelt wird, indem der Stellbereich jeweils sprungförmig in einem gesteuerten Betrieb vollständig in beiden Verstellrichtungen durchfahren und aus den dabei gemessenen Verfahrzeiten die Laufzeit des Ventils als Mittelwert berechnet wird, und dass beim Durchfahren des Ventil-Stellbereichs zur Bestimmung der statischen Abhängigkeit des Durchflusses von der vorgegebenen Stellgröße ein Vielfaches, vorzugsweise das Zehnfache, der Ventil-Laufzeit in den Zwischenstufen zum zumindest näherungsweisen Erreichen des stabilen Zustands des Durchflusses abgewartet wird.

3. Verfahren nach Anspruch 1 oder 2, **dadurch gekennzeichnet, dass** die Zwischenstufen (21...24) als 20%, 40%, 60% und 80% des vollständigen Ventil-Stellbereichs vorgegeben sind und dass zur Ermittlung der Zeitprozent-Kennwerte ($t_{10}$, $t_{90}$) dasjenige Intervall zwischen zwei Zwischenstufen (22, 23) verwendet wird, in welchem der Verlauf des Durchflusses beim sprungförmigen Durchfahren die größte Steigerung aufweist.

4. Verfahren nach einem der vorhergehenden Ansprüche, **dadurch gekennzeichnet, dass** als die erste und als die zweite prozentuale Änderung 10% bzw. 90% vorgegeben werden und dass die Ordnung n des PTn-Modells in Abhängigkeit des Quotienten aus dem ersten Zeitprozent-Kennwert ($t_{10}$) und dem zweiten Zeitprozent-Kennwert ($t_{90}$) zumindest näherungsweise berechnet wird nach der Formel

$$n = \frac{a}{\frac{t_{10}}{t_{90}} - c} + b$$

mit

a=-4,3159,
b=-5,3258 und
c= 0,7277.

5. Verfahren nach einem der vorhergehenden Ansprüche, **dadurch gekennzeichnet, dass** der Regler (5) als PI-Regler ausgebildet ist und seine Parameter nach dem Betragsoptimum eingestellt werden.

6. Verfahren nach einem der vorhergehenden Ansprüche, **dadurch gekennzeichnet, dass** nach der Einstellung der Reglerparameter in Abhängigkeit des PTn-Modells und Umschalten auf geregelten Betrieb eine Feineinstellung der Reglerverstärkung durchgeführt wird,
bei welcher zumindest ein Sollwertsprung (36...39) bestimmter Höhe auf den Reglereingang geschaltet wird und die bezüglich des Anfangswerts (26) und Endwerts (27) des Einschwingvorgangs relative Überschwingweite (OV) im Verlauf des Durchflusses ermittelt wird,
dass der bisherige Wert der Verstärkung ($K_{p,alt}$) durch Multiplikation mit einem Korrekturfaktor (KF) neu eingestellt wird, wobei
der Korrekturfaktor gleich Eins ist, wenn die Überschwingweite innerhalb eines vorgegebenen Toleranzbereichs liegt, größer als Eins ist, wenn die Überschwingweite kleiner als der untere Grenzwert des Toleranzbereichs ist, und kleiner als Eins ist, wenn die Überschwingweite größer als der obere Grenzwert des Toleranzbereichs ist.

7. Regeleinrichtung zur Durchführung des Verfahrens nach einem der vorhergehenden Ansprüche,
mit einem Leitungsventil (2) als Stellglied, dessen Stellung (z) nach Vorgabe einer Stellgröße (y) einstellbar ist,
mit einem Durchfluss-Messumformer (4) zur Erfassung des Istwerts (x) des Durchflusses und
mit einem Regler (5), der in einem geregelten Betrieb die Stellgröße (y) in Abhängigkeit eines vorgebbaren Sollwerts (w) des Durchflusses und des erfassten Istwerts (x) vorgibt, mit einem Schalter (9) zur wahlweisen Aufschaltung der vom Regler (5) erzeugten Stellgröße in einem geregelten Betrieb oder einer vorgebbaren Stellgröße in einem gesteuerten Betrieb auf das Leitungsventil (2) und
mit einer Einrichtung (8) zur Prozessidentifikation und zum Reglerentwurf, die derart ausgebildet ist,
dass zur Prozessidentifikation der Stellbereich des Ventils (2) mit mehreren Zwischenstufen (21...24), in denen jeweils zumindest näherungsweise das Erreichen eines stabilen Zustands des Durchflusses abgewartet wird, jeweils sprungförmig in einem gesteuerten Betrieb zur Bestimmung der statischen Abhängigkeit des Durchflusses von der vorgegebenen Stellgröße (y) durchfahren wird,
aus dem Anfangswert (26) und dem Endwert (27) des Durchflusses bei einem Sprung (29) der Stellgröße (y) von einer Zwischenstufe (22) auf eine darauf folgende, andere Zwischenstufe (23) zumindest zwei Kennwerte (31, 32) des Durchflusses, die einer ersten und einer zweiten vorgegebenen prozentualen Änderung des Durchflusses in Bezug auf den Übergang vom Anfangswert (26) auf den Endwert (27) entsprechen, bestimmt werden,
ein weiterer Sprung (34) der Stellgröße (y) von der einen Zwischenstufe (22) auf die andere Zwischenstufe (23) durchgeführt wird und die Zeiten zwischen Sprunganfang und Überschreiten des ersten Durchfluss-Kennwerts (31) als ein erster Zeitprozent-Kennwert ($t_{10}$) sowie zwischen Sprunganfang und Überschreiten des zweiten Durchfluss-Kennwerts (32) als ein zweiter Zeitprozent-Kennwert ($t_{90}$) ermittelt werden, anhand der beiden Zeitprozent-Kennwerte ($t_{10}$, $t_{90}$) nach dem Zeitprozent-Kennwerte-Verfahren die Parameter-Ordnung n und Zeitkonstante T eines PTn-Modells zur Modellierung der Abhängigkeit des Durchflusses von der Stellgröße ermittelt werden,

die Parameter des Reglers (5) in Abhängigkeit des PTn-Modells bestimmt und eingestellt werden und in einen geregelten Betrieb umgeschaltet wird, in welchem der so eingestellte Regler (5) den Durchfluss regelt.

**8.** Feldgerät mit einer Regeleinrichtung nach Anspruch 7.

**Claims**

**1.** Method for closed-loop control of the flow through a pipe (3) with a pipe valve (2) as actuating element, the position (z) of which can be set according to the preset of an actuating variable (y), with a flow measuring transducer (4) for ascertaining the actual value (x) of the flow and with a controller (5) which in closed-loop controlled operation presets the actuating variable (y) as a function of a presettable desired value (w) of the flow and the ascertained actual value (x), wherein for process identification the actuating area of the valve is passed through, with several intermediate stages (21...24), in which in each case at least approximate reaching of a stable state of the flow is waited for, in each case by jumps in open-loop controlled operation for determining the static dependence of the flow on the preset actuating variable (y), from the initial value (26) and the final value (27) of the flow at a jump (29) of the actuating variable (y) from an intermediate stage (22) to a following, different intermediate stage (23) at least two characteristic values (31, 32) of the flow, corresponding to a first and a second preset percentage change in the flow in relation to the transition from the initial value (26) to the final value (27), are determined, a further jump (34) of the actuating variable (y) from one intermediate stage (22) to the other intermediate stage (23) is carried out and the times between the start of the jump and exceeding the first flow characteristic value (31) are ascertained as a first time percentage characteristic value ($t_{10}$) and between the start of the jump and exceeding the second flow characteristic value (32) as a second time percentage characteristic value ($t_{90}$), using the two time percentage characteristic values ($t_{10}$, $t_{90}$) according to the time percentage characteristic value method the parameter order n and time constant T of a PTn model for modelling the dependence of the flow on the actuating variable are ascertained, wherein the parameters of the controller (5) are determined and set as a function of the PTn model and wherein there is a switch to closed-loop controlled operation, in which the thus set controller (5) controls the flow.

**2.** Method according to claim 1, **characterised in that** in a first step of the process identification the running time of the valve (2) is ascertained **in that** the actuating area is completely passed through in both adjustment directions in each case in jumps in open-loop controlled operation and from the therein measured travelling times the running time of the valve is calculated as a mean value and during passing through the valve actuating area, for determining the static dependence of the flow on the preset actuating variable, a multiple of, preferably ten times, the valve running time is waited for in the intermediate stages until the stable state of the flow has at least approximately been reached.

**3.** Method according to claim 1 or 2, **characterised in that** the intermediate stages (21...24) are preset as 20%, 40%, 60% and 80% of the entire valve actuating area and to ascertain the time percentage characteristic values ($t_{10}$, $t_{90}$) the interval between two intermediate stages (22, 23) in which the course of the flow has the greatest gradient during passing through by jumps is used.

**4.** Method according to one of the preceding claims; **characterised in that** 10% or 90% are preset as the first and the second percentage change and the order n of the PTn model is calculated at least approximately as a function of the quotient from the first time percentage characteristic value ($t_{10}$) and the second time percentage characteristic value ($t_{90}$) according to the formula

$$n = \frac{a}{\dfrac{t_{10}}{t_{90}} - c} + b$$

with

a = -4.3159

b = -5.3258 and
c = 0.7277.

**5.** Method according to one of the preceding claims, **characterised in that** the controller (5) is constructed as a PI controller and its parameters are set according to the optimum amount.

**6.** Method according to one of the preceding claims, **characterised in that**, after setting the controller parameters as a function of the PTn model and switching over to closed-loop controlled operation, a fine adjustment of the controller amplification is carried out,
in which at least one desired value jump (36...39) of a specific height is switched to the controller input and the amount of overshoot (OV) in the course of the flow relative to the initial value (26) and the final value (27) of the transient process is ascertained, the previous value of the amplification ($K_{p, old}$) is reset by multiplication by a correction factor (KF),
wherein
the correction factor is equal to one if the amount of overshoot is within a preset tolerance range, greater than one if the amount of overshoot is smaller than the lower limit value of the tolerance range and smaller than one if the amount of overshoot is greater than the upper limit value of the tolerance range.

**7.** Control device for carrying out the method according to one of the preceding claims,
with a pipe valve (2) as actuating element, the position (z) of which can be set according to the preset of an actuating variable (y),
with a flow measuring transducer (4) for ascertaining the actual value (x) of the flow and
with a controller (5) which in closed-loop controlled operation presets the actuating variable (y) as a function of a presettable desired value (w) of the flow and the ascertained actual value (x),
with a switch (9) for optional switching of the actuating variable generated by the controller (5) in closed-loop controlled operation or of a presettable actuating variable in open-loop controlled operation to the pipe valve (2) and
with a device (8) for process identification and for designing the controller, which is constructed in such a way that for process identification the actuating area of the valve (2) is passed through, with several intermediate stages (21...24), in which in each case at least approximate reaching of a stable state of the flow is waited for, in each case by jumps in open-loop controlled operation for determining the static dependence of the flow on the preset actuating variable (y),
from the initial value (26) and the final value (27) of the flow at a jump (29) of the actuating variable (y) from an intermediate stage (22) to a following, different intermediate stage (23) at least two characteristic values (31, 32) of the flow, corresponding to a first and a second preset percentage change in the flow in relation to the transition from initial value (26) to final value (27) are determined,
a further jump (34) of the actuating variable (y) from one intermediate stage (22) to the other intermediate stage (23) is carried out and the times between the start of the jump and exceeding the first flow characteristic value (31) are ascertained as a first time percentage characteristic value ($t_{10}$) and also between the start of the jump and exceeding the second flow characteristic value (32) as a second time percentage characteristic value ($t_{90}$),
using the two time percentage characteristic values ($t_{10}$, $t_{90}$) according to the time percentage characteristic value method the parameter order n and time constant T of a PTn model for modelling the dependence of the flow on the actuating variable are ascertained,
the parameters of the controller (5) are determined and set as a function of the PTn model and
there is a switch to closed-loop controlled operation, in which the thus set controller (5) controls the flow.

**8.** Field appliance with a control device according to claim 7.

**Revendications**

**1.** Procédé pour régler l'écoulement dans une conduite (3),
comportant en tant qu'actionneur une vanne de conduite (2) dont la position (z) peut être réglée après avoir déterminé une grandeur de réglage (y),
comportant un convertisseur de mesure d'écoulement (4) destiné à enregistrer la valeur effective (x) de l'écoulement et
comportant un régulateur (5) qui prédétermine dans un mode régulé la grandeur de réglage (y) en fonction d'une valeur de consigne (w) prédéterminable de l'écoulement et de la valeur effective (x) enregistrée,
pour lequel, afin d'identifier le processus, la plage de réglage de la vanne (2) qui a plusieurs étages intermédiaires (21, ..., 24) dans lesquels à chaque fois on s'attend à ce que l'écoulement atteigne au moins approximativement un état stable, est à chaque fois parcourue de façon discontinue dans un mode commandé afin de déterminer la façon dont l'écoulement dépend statiquement de la grandeur de réglage prédéterminée,

à partir de la valeur initiale (26) et de la valeur finale (27) de l'écoulement lorsque la grandeur de réglage (y) fait un saut (29) depuis un étage intermédiaire (22) jusqu'à un autre (23) suivant, on détermine au moins deux valeurs caractéristiques (31, 32) de l'écoulement qui correspondent à une première et

à une deuxième modification en pourcentage prédéfinie de l'écoulement en fonction du passage de la valeur initiale (26) à la valeur finale (27),

un autre saut (34) de la grandeur de réglage (y) est réalisé depuis l'étage intermédiaire (22) jusqu'à l'autre étage intermédiaire (23) et on établit en tant que première valeur caractéristique de proportion de temps ($t_{10}$) la durée entre le début du saut et le dépassement de la première valeur caractéristique d'écoulement (31) et, en tant que deuxième valeur caractéristique de proportion de temps ($t_{90}$), la durée entre le début du saut et le dépassement de la deuxième valeur caractéristique d'écoulement (32),

selon le procédé de valeurs caractéristiques de proportion de temps à l'aide des deux valeurs caractéristiques de proportion de temps ($t_{10}$, $t_{90}$), on établit l'ordre des paramètres n et la constante de temps T d'un modèle PTn pour modéliser la façon dont l'écoulement dépend de la grandeur de réglage,

les paramètres du régulateur (5) sont alors déterminés et réglés en fonction du modèle PTn et

on passe dans un mode régulé où le régulateur (5) ainsi réglé régule l'écoulement.

2. Procédé selon la revendication 1, **caractérisé en ce que**, dans une première étape de l'identification du processus, on établit la durée de parcours de la vanne (2) en parcourant entièrement dans les deux sens de déplacement la plage de réglage à chaque fois sous forme de sauts dans un mode régulé et à partir des durées de passage mesurées on calcule la durée de parcours de la vanne en tant que valeur moyenne et que, lorsqu'on parcourt la plage de réglage de la vanne pour déterminer la façon dont l'écoulement dépend statiquement de la grandeur de réglage prédéterminée, on s'attend à un multiple, de préférence un facteur dix, de la durée de parcours de vanne dans les étages intermédiaires pour atteindre au moins approximativement l'état stable de l'écoulement.

3. Procédé selon la revendication 1 ou 2, **caractérisé en ce que** les étages intermédiaires (21, ..., 24) sont prédéfinis en tant que 20 %, 40 %, 60 % et 80 % de la plage de réglage complète de la vanne et que, pour établir les valeurs caractéristiques de proportion de temps ($t_{10}$, $t_{90}$), on a recours à l'intervalle entre deux étages intermédiaires (22, 23) où le tracé de l'écoulement présente l'augmentation maximale lors du passage en forme de sauts.

4. Procédé selon l'une des revendications précédentes, **caractérisé en ce que** l'on prédéfinit 10 % ou 90 % en tant que première et que deuxième modification en pourcentage et que l'ordre n du modèle PTn est calculé au moins approximativement en fonction du quotient de la première valeur caractéristique de proportion de temps ($t_{10}$) sur la deuxième valeur caractéristique de proportion de temps ($t_{90}$) selon la formule

$$n = \frac{a}{\dfrac{t_{10}}{t_{90}} - c} + b$$

où

a = -4,3151,
b = -5,3258 et
c = 0,7277.

5. Procédé selon l'une des revendications précédentes, **caractérisé en ce que** le régulateur (5) est formé en tant que régulateur à action proportionnelle et intégrale et que ses paramètres sont réglés selon l'optimum en valeur absolue.

6. Procédé selon l'une des revendications précédentes, **caractérisé en ce que**, après avoir réglé les paramètres de réglage en fonction du modèle PTn et être passé en mode réglé, on réalise un réglage précis de l'amplification de régulateur,

pour lequel au moins un saut de valeur théorique (36, ..., 39) d'un niveau déterminé est mis en oeuvre à l'entrée du régulateur et

l'amplitude de dépassement (OV) relative qui dépend de la valeur initiale (26) et de la valeur finale (27) du phénomène transitoire est établie au cours de l'écoulement,
que la valeur actuelle de l'amplification ($K_{p,alt}$) est réglée à nouveau en multipliant par un facteur de correction (KF), le facteur de correction étant égal à un quand l'amplitude de dépassement est à l'intérieur d'une plage de tolérance prédéterminée, étant supérieur à un quand l'amplitude de dépassement est inférieure à la valeur limite inférieure de la plage de tolérance et étant inférieur à un quand l'amplitude de dépassement est supérieure à la valeur limite supérieure de la plage de tolérance.

7. Installation de réglage pour exécuter le procédé selon l'une des revendications précédentes, comportant en tant qu'actionneur une vanne de conduite (2) dont la position (z) peut être réglée après avoir déterminé une grandeur de réglage (y), comportant un convertisseur de mesure d'écoulement (4) destiné à enregistrer la valeur effective (x) de l'écoulement et comportant un régulateur (5) qui prédétermine dans un mode régulé la grandeur de réglage (y) en fonction d'une valeur de consigne (w) prédéterminable de l'écoulement et de la valeur effective (x) enregistrée, comportant un commutateur (9) destiné à influencer à volonté la grandeur de réglage produite par le régulateur (5) dans un mode réglé ou une grandeur de réglage prédéterminable dans un mode commandé sur la vanne de conduite (2) et comportant une installation (8) qui sert à identifier le processus et à préparer le régulateur et qui est conçue de telle manière que, afin d'identifier le processus, la plage de réglage de la vanne (2) qui a plusieurs étages intermédiaires (21, ..., 24) dans lesquels à chaque fois on s'attend à ce que l'écoulement atteigne au moins approximativement un état stable, est à chaque fois parcourue de façon discontinue dans un mode commandé afin de déterminer la façon dont l'écoulement dépend statiquement de la grandeur de réglage prédéterminée, à partir de la valeur initiale (26) et de la valeur finale (27) de l'écoulement lorsque la grandeur de réglage (y) fait un saut (29) depuis l'étage intermédiaire (22) jusqu'à un autre (23) suivant, on détermine au moins deux valeurs caractéristiques (31, 32) de l'écoulement qui correspondent à une première et à une deuxième modification en pourcentage prédéfinie de l'écoulement en fonction du passage de la valeur initiale (26) à la valeur finale (27), un autre saut (34) de la grandeur de réglage (y) est réalisé depuis l'étage intermédiaire (22) jusqu'à l'autre étage intermédiaire (23) et on établit en tant que première valeur caractéristique de proportion de temps ($t_{10}$) la durée entre le début du saut et le dépassement de la première valeur caractéristique d'écoulement (31) et, en tant que deuxième valeur caractéristique de proportion de temps ($t_{90}$), la durée entre le début du saut et le dépassement de la deuxième valeur caractéristique d'écoulement (32), selon le procédé de valeurs caractéristiques de proportion de temps à l'aide des deux valeurs caractéristiques de proportion de temps ($t_{10}$, $t_{90}$), on établit l'ordre des paramètres n et la constante de temps T d'un modèle PTn pour modéliser la façon dont l'écoulement dépend de la grandeur de réglage, les paramètres du régulateur (5) sont alors déterminés et réglés en fonction du modèle Tn et on passe dans un mode régulé où le régulateur (5) ainsi réglé régule l'écoulement.

8. Appareil de terrain comportant une installation de réglage selon la revendication 7.

FIG 1

FIG 3

FIG 2

**FIG 4**

**FIG 5**